# EUROPÄISCHE PATENTSCHRIFT

(11) **EP 1 048 881 B1**
(45) Veröffentlichungstag und Bekanntmachung des Hinweises auf die Patenterteilung: **21.12.2005**
(21) Anmeldenummer: 00107526.6
(22) Anmeldetag: 07.04.2000
(51) Int. Cl.: F16L 11/15

(54) **Kältemittelleitung für Klimaanlagen**
Refrigerant line for air conditioners
Conduite de produit réfrigérant pour conditionneurs d'air

(30) Priorität: 30.04.1999 DE 19919715
(43) Veröffentlichungstag der Anmeldung: 02.11.2000
(60) Teilanmeldung: 05020535.0
(73) Patentinhaber: Witzenmann GmbH, 75175 Pforzheim (DE)
(72) Erfinder: Burkhardt, Carlo, Dr., 75331 Grunbach (DE); Bantscheff, Richard, 75233 Tiefenbronn (DE); Heil, Bernhard, 76316 Malsch (DE); Kowalewsky, Kai, 71292 Friolsheim (DE); Picard, Frank, 63110 Rodgau (DE); Rettkowski, Klaus, 75433 Maulbronn (DE)
(74) Vertreter: Blumenröhr, Dietrich

(56) Entgegenhaltungen:
- DE-A- 2 705 361
- DE-A- 2 734 983
- DE-A- 3 506 626
- DE-A- 3 742 195
- DE-C- 19 749 252
- DE-U- 9 420 527
- FR-A- 2 759 141
- US-A- 3 420 553
- US-A- 5 089 074

## Beschreibung

Die Erfindung betrifft eine Kältemittelleitung für mit Kohlendioxid als Kältemittel betriebene Klimaanlagen, insbesondere Klimaanlagen von Kraftfahrzeugen, mit den Merkmalen des Oberbegriffs von Anspruch 1.

Klimaanlagen insbesondere von Kraftfahrzeugen werden bisher mit fluorchlorkohlenwasserstoffhaltigen Kältemitteln betrieben, wobei wegen dessen verhältnismäßig niedrigem Druck im Bereich von 30 bis 40 bar keine Probleme in der Verwendung von flexiblen Kältemittelleitungen in Form von Elastomerschläuchen bestehen, die bei Kraftfahrzeugen wegen der Relativbeweglichkeit miteinander zu verbindender Teile und zum Zwecke der Dämpfung auftretender Schwingungen erwünscht bzw. notwendig sind.

Nunmehr besteht jedoch zunehmend die Forderung, aus Gründen des Umweltschutzes und wegen der leichteren Entsorgung Kohlendioxid als Kältemittel zu verwenden. Da dieses jedoch in verflüssigtem Zustand einzusetzen ist, steht es unter einem erheblichen Druck im Bereich von bis zu 200 bar, so daß die bekannten flexiblen Elastomerschläuche insbesondere auch aus Gründen der Permationsdichtigkeit gegenüber Kohlendioxid nicht mehr eingesetzt werden können. Vielmehr müssen entsprechend druckstabile und permationsdichte starre Glattleitungen eingesetzt werden, mit Hilfe derer sich jedoch Relativbewegungen kaum aufnehmen lassen. Außerdem stoßen die an den Enden solcher Leitungen durch Schweißen anzubringenden Anschlußteile wegen der auftretenden Schwingungen auf Stabilitätsprobleme.

Aus der DE-A 27 05 361 ist eine schwimmfähige Schlauchleitung bekannt mit einer mediumführenden Innenleitung in Form eines Ringwellschlauchs, der mit einer Umflechtung versehen ist, sowie mit einer äußeren Leitung in Form eines Wickelschlauchs und einer dazwischen angeordneten Lage aus Isolierstoffen. Der Wellschlauch weist endständige Rohrstutzen auf, die Ringscheiben tragen zur Festlegung des äußeren Wickelschlauchs mit Hilfe zusätzlicher Ringe, wobei der Wickelschlauch über die Ringe an den Ringscheiben festgelegt und die Ringscheiben wiederum an den Rohrstutzen angeschweißt sind. Dieser Schlauchleitungsaufbau ist vergleichsweise aufwendig, schwer und teuer.

Des Weiteren ist aus der DE-U 94 20 527 eine flexible Gasleitung bekannt, die aus einem gasführenden Stahlrohr in Form eines Wellrohrs besteht, wobei das Wellrohr von einem schlauchartigen Geflecht umgeben ist. Das Wellrohr und das Geflecht sind dadurch endständig miteinander verbunden, dass an das Wellrohr stirnseitig ein zylindrisches Rohr angeschweißt ist, dass das Geflecht sich zumindest teilweise über dieses zylindrische Rohr erstreckt und dass das Geflecht und das zylindrische Rohr am Ende des Wellrohrs von einem Rohrstück umgeben sind, wobei das zylindrische Rohr und das Geflecht sowie das Rohrstück durch mindestens eine eingepresste Vertiefung fest miteinander verbunden sind. Dieser Schlauchleitung fehlt jedoch die für die Anwendungsfälle als Kältemittelleitung unerlässliche Zwischenlage, so dass diese Technik des Anschlusses des Geflechts am Wellrohr bzw. am zylindrischen Rohrstück nicht für eine gattungsgemäße Kältemittelleitung geeignet wäre (zumal sie auch die hierbei anfallenden Drücke von bis zu 200 bar gar nicht aufnehmen könnte).

Aufgabe der Erfindung ist es daher, eine Kältemittelleitung der eingangs genannten Art als flexible Leitung auszubilden, so daß sie in dem erforderlichen Umfang Relativbewegungen benachbarter Teile aufnehmen und insbesondere vom Verdichter für das Kältemittel herrührende Schwingungen ohne die Gefahr reibungsbedingten Verschleißes dämpfen kann. Außerdem sollte sie einfacher und damit leichter und kostengüngstiger als die bekannten Leitungen aufgebaut und herstellbar sein.

Diese Aufgabe wird erfindungsgemäß durch die Merkmale des Anspruchs 1 gelöst.

Erfindungsgemäß sind die Anschlußteile für die Kältemittelleitung Metallrohrstücke mit einem im Bereich des leitungsseitigen Endes angebrachten, radial nach außen vorstehenden Bund, wobei der Bund aus dem Metallrohrstück durch dessen radiale Aufweitung bzw. Auffaltung gebildet sein kann. Ausgehend von einer solchen Gestaltung kann dann der Mantel mit der Umfangsfläche des Bundes verbunden, insbesondere verschweißt sein. Insbesondere für einen aus einem Metalldrahtgeflecht gebildeten Mantel ist gemäß der vorliegenden Erfindung vorgesehen daß der Mantel über den jeweiligen Bund hinaus verlaufend und am Außenumfang des Bundes anliegend ausgebildet sowie mit seinen Enden bezogen auf den Wellschlauch jenseits des Bundes auf dem zugeordneten Metallrohrstück festgelegt, insbesondere angeschweißt ist. Auf diese Weise ist der Übergang des Mantels von dem einen kleineren Durchmesser aufweisenden Metallrohrstück auf den durch das Wellrohr mit aufgesetzter Zwischenlage gebildeten Außendurchmesser durch die Aufweitung bzw. Auffaltung abgestützt, so daß dieses aus dem Durchmesserübergang resultierende Abstützungserfordernis nicht von den endständigen Wellen des Wellschlauches als zusätzliche Belastung übernommen werden muß. Hier kann dann zusätzlich noch vorgesehen sein, daß die Mantelenden durch einen aufgesetzten Stützring aus Metall gefaßt sind und daß die Stützringe zusammen mit den Mantelenden mit den Metallrohrstücken verschweißt sind.

Was die Enden des Wellschlauches betrifft, so können diese mit dem radial innenliegenden Fuß des jeweils zugeordneten Bundes verbunden, insbesondere verschweißt sein, wobei es zweckmäßig ist, daß das Metallrohrstück der Anschlußteile in den dem Bund benachbarten Endbereich des Wellschlauches ragt und einen dessen Innendurchmesser entsprechenden Außendurchmesser aufweist, so daß der Wellschlauch endständig auch nach innen eine Radialabstützung hat sowie die Schweißverbindung zwischen Wellschlauch und Anschlußteil erleichtert ist. In diesem Zusammenhang kann es zur Herstellung eines preisgünstigen Anschlußteiles vorteilhaft sein, daß der Bund aus dem Metallrohrstück durch dessen radiale Aufweitung gebildet ist, Metallrohrstück und Bund also ein einstückiges Bauteil bilden.

Erfindungsgemäß weist die Leitung einen inneren, kältemitteldichten und mit den Anschlußteilen verbundenen Wellschlauch aus Metall auf, wobei der Wellschlauch mit radialem Abstand von einer radial druckfesten, mit den Anschlußteilen verbundenen Axialabstützung in Form eines flexiblen Mantels aus Metall umgeben ist, und wobei der Raum zumindest zwischen den radial außen liegenden Wellenbergen des Metallschlauches einerseits und der Ummantelung andererseits durch eine praktisch inkompressible und temperaturbeständige Zwischenlage aus Kunststoff spielfrei ausgefüllt ist.

Diese Maßnahmen haben die Wirkung, daß der Wellschlauch als bekanntermaßen flexibles Bauteil die gasdichte Führung des Kältemittels übernehmen kann. Da er jedoch den hohen Drücken sowie den vom Kältemittelverdichter kommenden Druckpulsationen nicht allein Stand zu halten vermag, ist ihm ein radial druckfester, flexibler Metallmantel beigegeben, der gleichermaßen die Axialkräfte abstützt, die der Wellschlauch entwickelt, indem er sich unter Innendruckbelastung zu längen sucht. Damit schließlich eine Reibpaarung zwischen Wellschlauch und Metallmantel vermieden ist, die unter den auftretenden Schwingungen und Druckpulsationen zur Zerstörung der radial außenliegenden Wellenberge des Wellschlauches führen könnte, ist zwischen Wellschlauch und Metallmantel eine praktisch druckfeste Zwischenlage aus Kunststoff vorgesehen, die die erforderlichen radialen Stützkräfte zwischen Wellschlauch und Metallmantel zu übertragen vermag und die gleichzeitig die Aufgabe eines Dämpfungsgliedes für die auftretenden Schwingungen, insbesondere vom Kältemittelverdichter kommende Pulsationen übernimmt.

Insgesamt ist so ein für hohe Drücke geeignetes Leitungselement geschaffen, das in dem erforderlichen Maße flexibel ist und gleichzeitig der Dämpfung auftretender Schwingungs- und Druckpulsationsbelastungen dient.

Der Wellschlauch könnte ein schraubengangförmig gewellter Metallschlauch sein. Wegen der sich damit bei hohen Innendrücken ergebenden Torsionsbewegungen zwischen den Enden des Metallschlauches ist es jedoch zweckmäßig, daß der Wellschlauch ein Ringwellschlauch aus Edelstahl ist.

Was den Metallmantel betrifft, so kann dies ein Geflechtsschlauch oder ein Gestrickschlauch aus Edelstahldrähten sein, wobei jedoch einem Geflechtsschlauch wegen seiner Fähigkeit zur Aufnahme höherer Stützkräfte der Vorzug gegeben wird. Ein solcher Geflechtsschlauch legt sich bekanntermaßen unter der vom Wellschlauch ausgeübten Streckbelastung von außen fest gegen die Zwischenlage aus Kunststoff an, so daß er dann in üblicherweise ausreichendem Maße in der Lage ist, aus der hohen Innendruckbelastung des Wellschlauches herrührende Radialbelastungen abzustützen.

Als besonders vorteilhaft wird es jedoch angesehen, daß der Metallmantel ein Agraffschlauch insbesondere in bezogen auf die Einbausituation der Leitung gestreckter Lage ist. Ein solcher Agraffschlauch ist bezüglich Radialbelastung praktisch steif, so daß er radiale Aufweitungen des Wellschlauches gerade aus hoher Innendruckbelastung sehr gut abzustützen vermag. Andererseits kann er den Wellschlauch gegen innendruckbedingte Längenänderung abstützen, wenn er so eingebaut wird, daß er sich bei der endgültigen Position der Kältemittelleitung in Strecklage befindet, wobei diese endgültige Einbausituation eine geradlinige, aber auch eine bogenförmige sein kann.

Ein Agraffschlauch hat im übrigen auch die Fähigkeit, in gewissem Maße Schwingungen zu dämpfen vermöge der gegenseitigen Reibung der bei seiner Herstellung miteinander verfalzten Bandkanten. Hier kann es im Rahmen der Erfindung zweckmäßig sein, daß die Packungsdichte bzw. -festigkeit der ineinandergreifenden Bandabschnitte des Agraffschlauches auf die für die Leitung erforderliche Dämpfung gegen Schwingungen eingestellt ist, indem der Agraffschlauch bei seiner Herstellung mehr oder weniger fest gewickelt wird, so daß er der gegenseitigen Axialverschiebung benachbarter Bandwindungen einen mehr oder weniger großen Widerstand entgegensetzt.

Was die Zwischenlage zwischen Wellschlauch und diesen mit Radialabstand umgebendem Mantel betrifft, so kann vorgesehen sein, daß diese aus einem auf die Außenseite des Wellschlauches aufgeschäumten Kunststoff besteht, der die vom Wellschlauch dargebotene Außenkontur vollständig ausfüllt und eine glattzylindrische Oberfläche zur Paarung mit dem Mantel bietet. Eine solche Zwischenlage ist bei in ihr enthaltenen Gaseinschlüssen zwar teilkompressibel, wobei sich diese Kompressibilität jedoch in solchen Grenzen bewegt, daß einerseits die erforderliche Flexibilität des Wellschlauches gewährleistet ist, andererseits aber auch eine genügende Radialkraftabstützung vorliegt. Werden jedoch besonders hohe Anforderungen an die Inkompressibilität der Zwischenlage gestellt, kann diese bei besonderer Materialwahl auch frei von Gaseinschlüssen sein.

Eine andere Bauform kann jedoch auch dadurch gegeben sein, daß die Zwischenlage durch einen auf den Wellschlauch geschobenen Kunststoffschlauch gebildet ist. Ein solcher Kunststoffschlauch ist inkompressibel und kann daher die Stützfunktion für den Wellschlauch uneingeschränkt ausüben. Vorteilhaft ist es dabei, wenn der Kunststoffschlauch auf seiner Innenseite mit einer den Kuppen der radial außenliegenden Wellenbergen des Wellschlauches angepaßten Profilierung versehen sowie mit nach radial innen gerichteter Vorspannung auf den Wellschlauch aufgezogen ist, da er dann auf dem Wellschlauch gegen Verschieben gesichert ist, wodurch die anschließende Montage des äußeren Metallmantels erleichtert wird.

Wie sich aus dem Vorstehenden ergibt, ist die Zwischenlage zunächst bezüglich ihrer Enden frei. Wesentlich ist nur, daß durch die Zwischenlage sämtliche radial nach außen vorstehenden Wellenberge des Wellschlauches erfaßt werden, damit neben der radialen Abstützung des Wellschlauches jegliche durch Schwingungen und Druckpulsationen verursachte Reibung zwischen Wellschlauch und Mantel durch die Zwischenlage aufgenommen werden kann. Was das Material der Zwischenlage betrifft, so kann der hier vorgesehene Kunststoff ein temperaturstabilisiertes Elastomer, vorteilhafterweise Silikonkautschuk sein.

Als besonders zweckmäßig im Sinne der Erfindung hat es sich jedoch erwiesen, daß die Zwischenlage dicht mit den Anschlußteilen verbunden ist, da auf diese Weise die Zwischenlage nicht nur ein Durchscheuern der außenliegenden Wellenberge des Wellschlauches verhindert sondern gleichzeitig einen wirksamen Schutz gegen den Zutritt äußerer Beeinträchtigungen und dadurch verursachte Korrosion des Wellschlauches bietet.

Weitere erfindungswesentliche Merkmale und Einzelheiten ergeben sich aus der nachfolgenden Beschreibung von Ausführungsformen, die auf der Zeichnung im Axialschnitt dargestellt sind. In der Zeichnung zeigen:
- Figur 1: eine nicht erfindungsgemäße Kältemittelleitung Axialschnitt;
- Figur 2: eine erfindungsgemäße Ausführungsform einer Kältemittelleitung im Axialschnitt und
- Figur 3: die Einzelheit III aus Figur 2 in vergrößerter Darstellung.

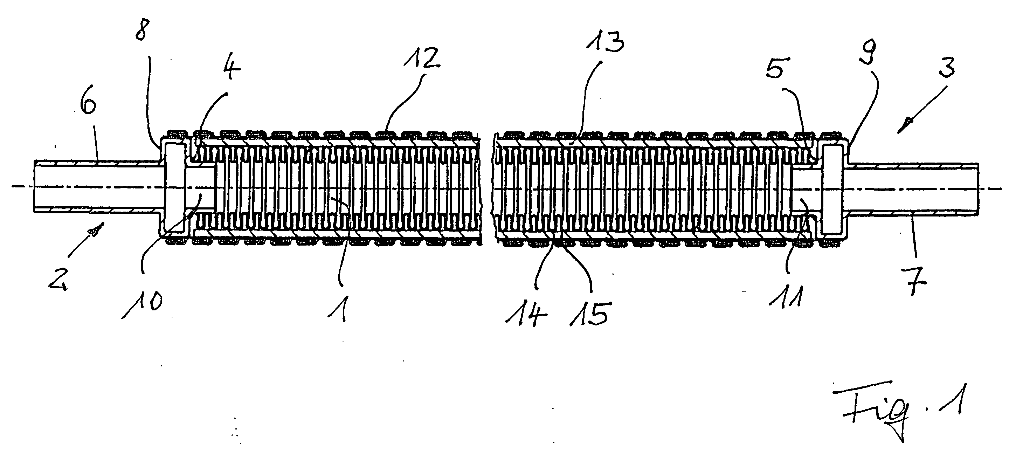

Figur 1 zeigt einen Ringwellschlauch 1 aus Edelstahl, der endständig mit Anschlußteilen 2, 3 durch Laserschweißnähte 4, 5 verbunden ist.

Die Anschlußteile 2, 3 bestehen aus Rohrstücken 6, 7, deren äußeres freies Ende als Anschweißende für weiterführende Bauteile ausgebildet sein kann. Im Bereich der Enden des Wellschlauches 1 sind aus den Rohrstükken 6, 7 durch Verformung radial nach außen vorstehende Bünde 8, 9 gebildet so, daß die Rohrstücke mit einem endständig verbleibenden Abschnitt 10, 11 noch in die Enden des Wellschlauches 1 ragen, diesen dabei auf seiner Innenseite halten und gleichzeitig die Anbringung der Schweißnähte 4, 5 erleichtern.

Mit radialem Abstand gegenüber dem Außenumfang des Wellschlauches 1 ist ein Agraffschlauch 12 aus Edelstahl vorgesehen, der mit seinen Enden beispielsweise durch Punktschweißen auf der Umfangsfläche des jeweils zugeordneten Bundes 8, 9 festgelegt ist. Der Agraffschlauch 12 befindet sich in auseinandergezogener, also Strecklage, wenn die dargestellte Form der Kältemittelleitung gleichzeitig auch der Einbausituation entspricht. Soll die Kältemittelleitung in gebogener Form eingebaut werden, befindet sich bei der aus der Zeichnung ersichtlichen Position der Agraffschlauch 12 in einer solchen Lage, daß er bei Biegung der Kältemittelleitung auf der Au-ßenseite des dann entstehenden Bogens in Strecklage gerät.

Der Agraffschlauch 12 ist bezüglich Radialbelastung praktisch starr, so daß er vom Wellschlauch 1 unter hoher Innendruckbelastung ausgehende radiale Aufweitungen abstützen kann. Damit in diesem Zusammenhang eine abrieberzeugende Paarung zwischen Wellschlauch 1 und Agraffschlauch 12 vermieden ist, ist der radiale Zwischenraum zwischen diesen beiden Teilen durch einen Silikonkautschukschlauch 13 spielfrei ausgefüllt, wobei in nicht dargestellter Weise der Silikonkautschukschlauch 13 unter radialer Vorspannung auf den Wellschlauch 1 aufgezogen sein kann, so daß er auf diesem gegen Axialverschiebung festgelegt ist, indem das Material des Silikonkautschukschlauches 13 sich etwas in den Zwischenraum zwischen benachbarte Wellenberge 14, 15 des Wellschlauches 1 einwölbt. Ein solches geringfügiges Eindringen des Schlauches 13 in den Zwischenraum zwischen benachbarten Wellenbergen 14, 15 kann aber auch zusätzlich dadurch erzeugt bzw. unterstützt werden, daß dem Schlauch 13 schon von der Herstellung her eine entsprechende Profilierung seiner inneren Oberfläche gegeben wird.

Die soweit dargestellte und beschriebene Kältemittelleitung ist flexibel, andererseits aber auch zur Aufnahme eines unter hohem Druck stehenden Kältemittels geeignet. Vermöge ihrer Gestaltung kann sie auftretende Schwingungen, insbesondere Druckpulsationen von Seiten des Kältemittelverdichters dämpfen.

Da der Wellschlauch 1 sowohl radial als auch axial abgestützt ist, kann er trotz der aufzunehmenden hohen Innendruckbelastung verhältnismäßig dünnwandig und damit hochflexibel ausgeführt sein. Was die radiale Dicke des Silikonkautschukschlauches 13, also den Radialabstand zwischen Wellschlauch 1 und Agraffschlauch 12 betrifft, so ist hier eine Größenordnung von 1 bis 1,5 mm zweckmäßig und ausreichend.

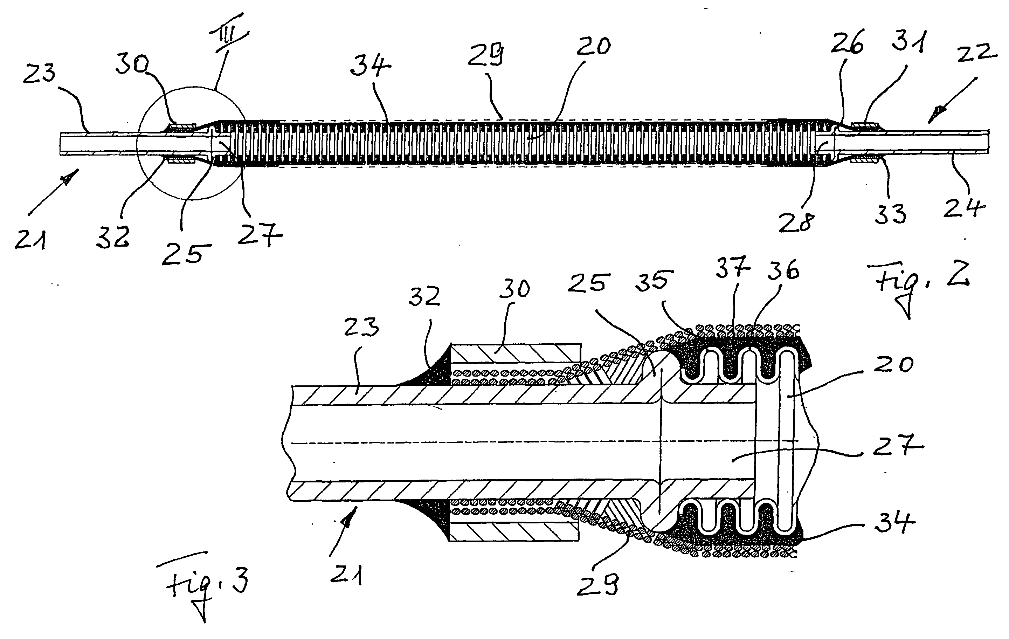

Figur 2 zeigt eine erfindungsgemäße Abwandlung der Kältemittelleitung gemäß Figur 1, wobei mit Figur 3 ein Ende der Leitung zur besseren Übersicht vergrößert dargestellt ist.

Auch hier ist wieder ein Ringwellschlauch 20 aus Edelstahl endständig mit Anschlußteilen 21, 22 beispielsweise durch Laserschweißnähte verbunden. Die Anschlußteile 21, 22 bestehen aus Rohrstücken 23, 24, aus denen im Bereich der Enden des Wellschlauches 20 durch Auffaltung radial nach außen vorstehende Bünde 25, 26 gebildet sind so, daß die Rohrstücke mit einem endständig verbleibenden Abschnitt 27, 28 noch in die Enden des Wellschlauches 20 ragen, um diesen auf seiner Innenseite zu stützen.

Mit radialem Abstand gegenüber dem Wellschlauch 20 ist ein Geflechtsschlauch 29 aus Edelstahldrähten angeordnet, dessen Enden über die Bünde 25, 26 fort auf die Rohrstücke 23, 24 geführt und dort zusammen mit aufgesetzten Stützringen 30, 31 bei 32, 33 angeschweißt sind. Diese Bauform bewirkt, daß die endständigen Wellen des Wellschlauches 20 von der Umlenkung des Geflechtsmantels 29 auf den kleineren Außendurchmesser der Rohrstücke 23, 24 entlastet sind, in dem die damit einhergehende Belastung von den Bünden bzw. Auffaltungen 25, 26 aufgenommen wird.

Der Geflechtsschlauch 29 ist bezüglich Radialbelastung fest genug, um vom Wellschlauch 1 unter hoher Innendruckbelastung ausgehende radiale Aufweitungen abzustützen. Um hierbei eine abrieberzeugende Paarung zwischen Wellschlauch 20 und Geflechtsmantel 29 zu vermeiden, ist der radiale Zwischenraum zwischen diesen beiden Teilen durch eine Zwischenlage 34 spielfrei ausgefüllt, die aus auf die Außenseite des Wellschlauches 20 aufgeschäumtem, die zwischen benachbarten Wellenbergen 35, 36 gelegenen Wellentäler 37 des Wellschlauches 20 ausfüllendem Kunststoff besteht. Um den Wellschlauch 20 mit der Zwischenlage 34 dicht zu umgeben, sind die Enden der Zwischenlage 34 beim Aufspritzen gleichzeitig dicht mit den Anschlußteilen 21, 22 bzw. deren Auffaltungen 25, 26 verbunden. Auf diese Weise ist neben der Vermeidung einer Reibung zwischen Wellschlauch 20 und Geflechtsmantel 29 gleichzeitig auch der Wellschlauch 20 vor jeglichem Zutritt von außen und damit vor korrosionsbildenden Ursachen geschützt.

Zwischen den in den Figuren 1 bzw. 2, 3 gezeigten Bauformen sind selbstverständlich auch abweichende Kombinationen denkbar. So kann beispielsweise die Zwischenlage 34 gemäß Figur 2 und 3 auch durch einen Kautschukschlauch 13 gemäß Figur 1 ersetzt werden, in dem dieser endständig ebenfalls über die Auffaltungen 25, 26 nach außen geführt wird, so daß er ebenfalls den Wellschlauch 20 dicht umschließt.

## Patentansprüche

1. Kältemittelleitung für mit Kohlendioxid als Kältemittel betriebene Klimaanlagen, insbesondere Klimaanlagen von Kraftfahrzeugen, wobei die Leitung an beiden Enden dicht mit Anschlußteilen zur Verbindung mit weiterführenden Bauteilen versehen, insbesondere verschweißt ist,
wobei die Leitung einen inneren, kältemitteldichten und mit den Anschlußteilen (21, 22) verbundenen Wellschlauch (20) aus Metall aufweist, wobei der Wellschlauch (20) mit radialem Abstand von einer radial druckfesten, mit den Anschlußteilen (21, 22) verbundenen Axialabstützung in Form eines flexiblen Mantels (29) aus Metall umgeben ist und wobei der Raum zumindest zwischen den radial außenliegenden Wellenbergen (35, 36) des Metallschlauches (20) einerseits und der Ummantelung (29) andererseits durch eine praktisch inkompressible und temperaturbeständige Zwischenlage (34) aus Kunststoff spielfrei ausgefüllt ist, **dadurch gekennzeichnet,**
**daß** die Anschlußteile (21, 22) Metallrohrstücke (23, 24) mit einem im Bereich des leitungsseitigen Endes angebrachten, radial nach au-ßen vorstehenden Bund (25, 26) sind und daß der Mantel (29) über den jeweiligen Bund (25, 26) hinaus verlaufend und am Außenumfang des Bundes (25, 26) anliegend ausgebildet sowie mit seinen Enden bezogen auf den Wellschlauch (20) jenseits des Bundes (25, 26) auf dem zugeordneten Metallrohrstück (23, 24) festgelegt, insbesondere angeschweißt ist.

2. Kältemittelleitung nach Anspruch 1,
**dadurch gekennzeichnet,**
**daß** der Wellschlauch (20) ein Ringwellschlauch aus Edelstahl ist.

3. Kältemittelleitung nach Anspruch 1 oder 2,
**dadurch gekennzeichnet,**
**daß** der Mantel ein Geflechtsschlauch (29) oder ein Gestrickschlauch aus Edelstahldrähten ist.

4. Kältemittelleitung nach Anspruch 1 oder 2,
**dadurch gekennzeichnet,**
**daß** der Mantel ein Agraffschlauch ist.

5. Kältemittelleitung nach Anspruch 4,
**dadurch gekennzeichnet,**
**daß** der Agraffschlauch in bezogen auf die Einbausituation der Leitung gestreckter Lage eingebaut ist.

6. Kältemittelleitung nach Anspruch 4 oder 5,
**dadurch gekennzeichnet,**
**daß** die Packungsdichte bzw. -festigkeit der ineinandergreifenden Bandabschnitte des Agraffschlauches auf die für die Leitung erforderliche Dämpfung gegen Schwingungen eingestellt ist.

7. Kältemittelleitung nach Anspruch 4, 5 oder 6,
**dadurch gekennzeichnet,**
**daß** der Agraffschlauch ein Edelstahlschlauch ist.

8. Kältemittelleitung nach einem oder mehreren der Ansprüche 1 bis 7,
**dadurch gekennzeichnet,**
**daß** die Zwischenlage (34) aus einem auf die Außenseite des Wellschlauches (20) aufgeschäumten, die Wellentäler (37) ausfüllenden Kunststoff besteht.

9. Kältemittelleitung nach einem oder mehreren der Ansprüche 1 bis 7,
**dadurch gekennzeichnet,**
**daß** die Zwischenlage durch einen auf den Wellschlauch geschobenen Kunststoffschlauch gebildet ist.

10. Kältemittelleitung nach Anspruch 9,
**dadurch gekennzeichnet,**
**daß** der Kunststoffschlauch auf seiner Innenseite mit einer den Kuppen der radial außenliegenden Wellenberge des Wellschlauches angepaßten Profilierung versehen ist.

11. Kältemittelleitung nach Anspruch 9 oder 10,
**dadurch gekennzeichnet,**
**daß** der Kunststoffschauch mit nach radial innen gerichteter Vorspannung auf den Wellschlauch (1) aufgezogen ist.

12. Kältemittelleitung nach einem der Ansprüche 8 bis 11,
**dadurch gekennzeichnet,**
**daß** der Kunststoff ein temperaturstabilisiertes Elastomer ist.

13. Kältemittelleitung nach Anspruch 12,
**dadurch gekennzeichnet,**
**daß** der Kunststoff Silikonkautschuk ist.

14. Kältemittelleitung nach einem oder mehreren der vorhergehenden Ansprüche,
**dadurch gekennzeichnet,**
**daß** die Zwischenlage (34) dicht mit den Anschlußteilen (21, 22) verbunden ist.

15. Kältemittelleitung nach Anspruch 14 oder 1,
**dadurch gekennzeichnet,**
**daß** der Bund (25, 26) aus dem Metallrohrstück (23, 24) durch dessen radiale Aufweitung bzw. Auffaltung gebildet ist.

16. Kältemittelleitung nach Anspruch 1 oder 15,
**dadurch gekennzeichnet,**
**daß** der Mantel (12) mit der Umfangsfläche des Bundes verbunden, insbesondere verschweißt ist.

17. Kältemittelleitung anch Anspruch 1,
**dadurch gekennzeichnet,**
**daß** die Mantelenden durch einen aufgesetzten Stützring (30, 31) aus Metall gefaßt sind und daß die Stützringe (30, 31) zusammen mit den Mantelenden mit den Metallrohrstücken (23, 24,) verschweißt (32, 33) sind.

18. Kältemittelleitung nach einem oder mehreren der Ansprüche 1, 15 bis 17,
**dadurch gekennzeichnet,**
**daß** die Enden des Wellschlauches (20) mit dem radial innenliegenden Fuß des jeweils zugeordneten Bundes (25, 26) verbunden, insbesondere verschweißt sind.

19. Kältemittelleitung nach Anspruch 18,
**dadurch gekennzeichnet,**
**daß** das Metallrohrstück (23, 24) in den dem Bund (25, 26) benachbarten Endbereich des Wellschlauches (20) ragt (Abschnitte 27, 28) und einen dessen Innendurchmesser entsprechenden Außendurchmesser aufweist.

20. Kältemittelleitung nach einem der Ansprüche 1, 15 bis 19,
**dadurch gekennzeichnet,**
**daß** die Anschlußteile (21, 22) aus Edelstahl hergestellt sind.

## Claims

1. A coolant line for air conditioning systems operating with carbon dioxide as coolant, in particular air conditioning systems of motor vehicles, in which the line is provided tightly at both ends in particular by welding, to connecting parts for connection to further components, wherein the line has an inner coolant-tight corrugated hose (20) made from metal and connected to the connecting parts (21, 22), wherein the corrugated hose (20) is surrounded with a radial clearance by a radially pressure-tight axial support in the form of a flexible jacket (29) made from metal which is connected to the connecting parts (21, 22), and wherein the space at least between the radially outer crests (35, 36) of the metal hose (20) on the one hand and the jacket (29) on the other hand is filled without play by a practically incompressible and temperature-resistant intermediate layer (34) made from plastics material, **characterised in that** the connecting parts (21, 22) are metal tubular pieces (23, 24) with a radially outwardly projecting collar (25, 26) attached in the region of the end facing the line, and that the jacket (29) is constructed so that it extends beyond the respective collar (25, 26) and rests on the outer circumference of the collar (25, 26) and is also fixed, in particular welded, by its ends on the associated metal tubular piece (23, 24) on the other side of the collar (25, 26) with respect to the corrugated hose (20).

2. Coolant line as claimed in Claim 1, **characterised in that** the corrugated hose (20) is an annular corrugated hose made from stainless steel.

3. Coolant line as claimed in Claim 1 or 2, **characterised in that** the jacket is a braided hose (29) or a knitted hose made from stainless steel wires.

4. Coolant line as claimed in Claim 1 or 2, **characterised in that** the jacket is an interlocked hose.

5. Coolant line as claimed in Claim 4, **characterised in that** the interlocked hose is installed in a stretched position with respect to the installed situation of the line.

6. Coolant line as claimed in Claim 4 or 5, **characterised in that** the packing density or strength of the interengaging strip portions of the interlocking hose is adjusted to the vibration damping necessary for the line.

7. Coolant line as claimed in claim 4, 5 or 6, **characterised in that** the interlocking hose is a stainless steel hose.

8. Coolant line as claimed in one or more of Claims 1 to 7, **characterised in that** the intermediate layer (34) is made from a plastics material which is foamed onto the outside of the corrugated hose (20) and fills the corrugation troughs (37).

9. Coolant line as claimed in one or more of Claims 1 to 7, **characterised in that** the intermediate layer is formed by a plastics hose which is pushed onto the corrugated hose.

10. Coolant line as claimed in Claim 9, **characterised in that** the corrugated hose is provided on its inner face with a profiling adapted to the peaks of the radially outer crests of the corrugated hose.

11. Coolant line as claimed in Claim 9 or 10, **characterised in that** the plastics hose is drawn onto the corrugated hose (1) and said plastic hose with a radially inwardly directed prestressing.

12. Coolant line as claimed in any one of Claims 8 to 11, **characterised in that** the plastics material is a temperature-stabilised elastomer.

13. Coolant line as claimed in Claim 12, **characterised in that** the plastics material is silicone rubber.

14. Coolant line as claimed in one or more of the preceding claims, **characterised in that** the intermediate layer (34) is tightly connected to the connecting parts (21, 22).

15. Coolant line as claimed in claim 14 or 1, **characterised in that** the collar (25, 26) is formed from the metal tubular piece (23, 24) by radial expansion or folding thereof.

16. Coolant line as claimed in Claim 1 or 15, **characterised in that** the jacket (12) is connected, in particular welded, to the circumferential surface of the collar.

17. Coolant line as claimed in Claim 1, **characterised in that** the jacket ends are held by a support ring (30, 31) made from metal, and that the support rings (30, 31) together with the jacket ends are welded (32, 33) to the metal tubular pieces (23, 24).

18. Coolant line as claimed in one or more of Claims 1, 15 to 17, **characterised in that** the ends of the corrugated hose (20) are connected, in particular welded, to the radially inner base of the respective associated collar (25, 26).

19. Coolant line as claimed in Claim 18, **characterised in that** the metal tubular piece (23, 24) projects into the end region of the corrugated hose (20) adjacent to the collar (25, 26) and has an external diameter which corresponds to the internal diameter of the hose.

20. Coolant line as claimed in any one of Claims 1, 15 to 19, **characterised in that** the metal tubular pieces (21, 22) are made from stainless steel.

## Revendications

1. Conduite de réfrigérant pour des conditionneurs d'air exploités avec dioxyde de carbone, en particulier des conditionneurs d'air de véhicules automobiles, sachant que la conduite est hermétiquement pourvue aux deux extrémités, notamment par soudage, de pièces de raccordement pour l'assemblage à des éléments menant plus loin, sachant que la conduite présente un tuyau souple ondulé intérieur (20) en métal, étanche au réfrigérant et assemblé aux pièces de raccordement (21, 22), sachant que le tuyau souple ondulé (20) est entouré à distance radiale d'un soutien axial radialement résistant à la pression, assemblé aux pièces de raccordement (21, 22), sous la forme d'une gaine flexible (29) en métal, et sachant que l'espace au moins entre les sommets d'ondulation radialement extérieurs (35, 36) du tuyau souple ondulé (20) d'une part et le gainage (29) d'autre part est rempli sans jeu par une couche intermédiaire (34) en matière plastique, quasiment incompressible et résistante à la température,
**caractérisée en ce que** les pièces de raccordement (21, 22) sont des éléments tubulaires métalliques (23, 24) dotés d'un collet (25, 26) faisant saillie radialement vers l'intérieur qui est installé dans la région de l'extrémité côté conduite, et **en ce que** la gaine (29) est conçue de manière à s'étendre au-delà du collet respectif (25, 26) et s'appliquer sur la circonférence extérieure du collet (25, 26), et est, par ses extrémités, fixée en position par rapport au tuyau souple ondulé (20) au-delà du collet (25, 26) sur l'élément tubulaire métallique associé (23, 24), notamment par soudage.

2. Conduite de réfrigérant selon la revendication 1, **caractérisée en ce que** le tuyau souple ondulé (20) est un tuyau souple ondulé annulaire en acier spécial.

3. Conduite de réfrigérant selon la revendication 1 ou 2, **caractérisée en ce que** la gaine est un tuyau souple en tresse métallique (29) ou un tuyau souple en mailles de fils d'acier spécial.

4. Conduite de réfrigérant selon la revendication 1 ou 2, **caractérisée en ce que** la gaine est un tuyau souple à agrafage.

5. Conduite de réfrigérant selon la revendication 4, **caractérisée en ce que** le tuyau souple à agrafage est monté en position étirée par rapport à la situation d'installation de la conduite.

6. Conduite de réfrigérant selon la revendication 4 ou 5, **caractérisée en ce que** la densité ou la résistance de tassement des tronçons de bande engagés les uns dans les autres du tuyau souple à agrafage est réglée à l'amortissement contre les vibrations qui est nécessaire pour la conduite.

7. Conduite de réfrigérant selon la revendication 4, 5 ou 6, **caractérisée en ce que** le tuyau souple à agrafage est un tuyau souple en acier spécial.

8. Conduite de réfrigérant selon une ou plusieurs des revendications 1 à 7, **caractérisée en ce que** la couche intermédiaire (34) est réalisée en une matière plastique moussée sur la face extérieure du tuyau souple ondulé (20) et remplissant les creux d'ondulation (37).

9. Conduite de réfrigérant selon une ou plusieurs des revendications 1 à 7, **caractérisée en ce que** la couche intermédiaire est formée par un tuyau souple en matière plastique enfilé sur le tuyau souple ondulé.

10. Conduite de réfrigérant selon la revendication 9, **caractérisée en ce que** le tuyau souple en matière plastique est pourvu sur sa face intérieure d'un profilage adapté aux dômes des sommets d'ondulation radialement extérieurs du tuyau souple ondulé.

11. Conduite de réfrigérant selon la revendication 9 ou 10, **caractérisée en ce que** le tuyau souple en matière plastique est emmanché sur le tuyau souple ondulé (1) avec une précontrainte dirigée radialement vers l'intérieur.

12. Conduite de réfrigérant selon l'une des revendications 8 à 11, **caractérisée en ce que** la matière plastique est un élastomère stabilisé en température.

13. Conduite de réfrigérant selon la revendication 12, **caractérisée en ce que** la matière plastique est un caoutchouc silicone.

14. Conduite de réfrigérant selon une ou plusieurs des revendications précédentes, **caractérisée en ce que** la couche intermédiaire (34) est hermétiquement assemblée aux pièces de raccordement (21, 22).

15. Conduite de réfrigérant selon la revendication 1 ou 14, **caractérisée en ce que** le collet (25, 26) est formé à partir de l'élément tubulaire métallique (23, 24) par élargissement ou déploiement radial de ce dernier.

16. Conduite de réfrigérant selon la revendication 1 ou 15, **caractérisée en ce que** la gaine (12) est assemblée à la face circonférentielle du collet, notamment par soudage.

17. Conduite de réfrigérant selon la revendication 1, **caractérisée en ce que** les extrémités de la gaine sont serties par une bague de soutien (30, 31) en métal posée sur elles, et **en ce que** les bagues de soutien (30, 31) sont assemblées par soudage (32, 33) aux éléments tubulaires métalliques (23, 24) conjointement avec les extrémités de la gaine.

18. Conduite de réfrigérant selon une ou plusieurs des revendications 1, 15 à 17, **caractérisée en ce que** les extrémités du tuyau souple ondulé (20) sont assemblées, notamment par soudage, à la base radialement intérieure du collet (25, 26) respectivement associé.

19. Conduite de réfrigérant selon la revendication 18, **caractérisée en ce que** l'élément tubulaire métallique (23, 24) dépasse (parties 27, 28) dans la région terminale du tuyau souple ondulé (20) qui est voisine du collet (25, 26), et présente un diamètre extérieur correspondant au diamètre intérieur du tuyau souple ondulé (20).

20. Conduite de réfrigérant selon une ou plusieurs des revendications 1, 15 à 19, **caractérisée en ce que** les pièces de raccordement (21, 22) sont fabriquées en acier spécial.
